(19) Europäisches Patentamt / European Patent Office / Office européen des brevets

(11) **EP 3 151 074 A1**

(12) **DEMANDE DE BREVET EUROPEEN**

(43) Date de publication:
05.04.2017 Bulletin 2017/14

(51) Int Cl.:
*G05B 19/4093* (2006.01)

(21) Numéro de dépôt: **16190573.2**

(22) Date de dépôt: **26.09.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **29.09.2015 FR 1559212**

(71) Demandeur: **GO2CAM INTERNATIONAL**
**69001 Lyon (FR)**

(72) Inventeur: **YU, Zhan Qing**
**69006 Lyon (FR)**

(74) Mandataire: **GIE Innovation Competence Group**
**310, avenue Berthelot**
**69372 Lyon Cedex 08 (FR)**

(54) **PROCÉDÉ DE DÉTERMINATION DU TRAJET D'UN OUTIL D'USINAGE**

(57) L'invention concerne un procédé de détermination du trajet d'un outil (1) d'usinage pour fabriquer une pièce (21, 22) par usinage dans un bloc (2) de matière brute, comportant les étapes suivantes :
- Détermination de la position de l'outil (1),
- Détermination du vecteur (V) de mouvement de l'outil en tenant compte de ladite position,
- Détermination d'une valeur d'aire d'engagement ($A$) de l'outil par rapport au bloc (2) de matière brute à partir du vecteur (V) de mouvement de l'outil déterminé,
- Comparaison de ladite valeur d'aire d'engagement calculée avec une valeur maximale ($A_{max}$) mémorisée,
- Modification du vecteur (V) de mouvement de l'outil tant que la valeur d'aire d'engagement est supérieure à ladite valeur maximale mémorisée.

**Fig. 1A**

EP 3 151 074 A1

**Description**

**Domaine technique de l'invention**

La présente invention se rapporte à un procédé de détermination du trajet d'un outil d'usinage.

**Etat de la technique**

Aujourd'hui, la fabrication d'une pièce par usinage est réalisée en employant une machine à commande numérique. La machine comporte un outil, pouvant prendre différentes formes, commandé à haute vitesse par un logiciel de FAO (Fabrication Assistée par Ordinateur) pour enlever de la matière dans un bloc de matière brut. L'enlèvement de matière est réalisé par plusieurs passes successives et éventuellement à différentes profondeurs. Dans la fabrication d'une pièce par usinage, on distingue l'usinage des poches ouvertes de l'usinage des poches fermées. La poche ouverte est directement accessible par l'outil par l'extérieur du bloc de matière. La poche fermée est circonscrite par de la matière et nécessite au préalable, avant de commencer l'usinage, d'enfoncer l'outil dans le bloc de matière. Récemment, il a été proposé d'usiner les poches fermées en pilotant l'outil selon une trajectoire en spirale. Ce type de trajectoire permet en effet de tenir compte de la charge de l'outil contre la matière, améliorant ainsi sa durée de vie. La demande de brevet US2005/0246052A1 décrit une telle solution. Elle prévoit de tenir compte de l'angle d'engagement de l'outil dans la matière, c'est-à-dire l'angle de contact entre l'outil et la matière à usiner. Dans ce document, le programme informatique détermine le trajet de l'outil en faisant en sorte que l'angle d'engagement de l'outil dans la matière ne dépasse jamais une valeur prédéterminée. En outre, ce document prévoit de calculer le trajet de l'outil par une méthode récursive d'intersection de demi-droites.

La solution décrite dans le document US2005/0246052A1 est intéressante en ce qu'elle permet d'améliorer la durée de vie de l'outil. Cependant, la charge de l'outil ne peut se résumer au simple angle d'engagement. De plus, cette solution antérieure ne permet pas d'optimiser le trajet de l'outil.

D'autres solutions d'usinage sont également décrites dans les documents US2013/0151000A1, US2013/0325165A1 et US2014/0297021 A1.

Le but de l'invention est de proposer un procédé de détermination du trajet d'un outil d'usinage, permettant une optimisation du trajet effectué ce qui réduit la durée d'usinage, tout en respectant une charge de l'outil constante et contrôlée pour préserver l'outil et ainsi augmenter sa durée de vie.

**Exposé de l'invention**

Ce but est atteint par un procédé de détermination du trajet d'un outil d'usinage pour fabriquer une pièce par usinage dans un bloc de matière brute, ledit procédé comportant les étapes suivantes :

- Détermination de la position de l'outil,
- Détermination du vecteur de mouvement de l'outil en tenant compte de ladite position,
- Détermination d'une valeur d'aire d'engagement de l'outil par rapport au bloc de matière brute à partir du vecteur de mouvement de l'outil déterminé,
- Comparaison de ladite valeur d'aire d'engagement calculée avec une valeur maximale mémorisée,
- Modification du vecteur de mouvement de l'outil tant que la valeur d'aire d'engagement est supérieure à ladite valeur maximale mémorisée.

Avantageusement, lors de l'usinage d'une poche fermée dans ledit bloc de matière brute, le trajet de l'outil suit une spirale découpée en plusieurs portions, et en ce que, pour chaque nouvelle portion de la spirale, l'étape de détermination du vecteur de mouvement de l'outil est mise en oeuvre en tenant compte d'un coefficient, dit d'incrémentation radiale.

Avantageusement, le coefficient d'incrémentation radiale est déterminé à partir d'un rayon de la portion de spirale précédente, d'un paramètre de dimension de l'outil, d'un décalage maximal de l'usinage mémorisé et d'un coefficient. Selon une particularité de l'invention, ce dernier coefficient prend une valeur déterminée à l'issue d'une recherche par dichotomie, ladite valeur du coefficient étant choisie dans un intervalle dans lequel la valeur d'aire d'engagement de l'outil est inférieure à ladite valeur maximale mémorisée.

Selon l'invention, chaque portion du trajet est réalisée sur un angle de 360°. Avantageusement, lors de l'usinage d'une poche ouverte dans ledit bloc de matière, le trajet de l'outil est constitué de plusieurs portions rectilignes, chaque portion étant tracée entre un point initial et un point final suivant ledit vecteur de mouvement déterminé pour une valeur d'aire d'engagement de l'outil inférieure à ladite valeur maximale. Dans cette situation, chaque point final d'une première portion devient le point initial d'une deuxième portion du trajet et en ce que le point final de ladite deuxième portion est déterminé par dichotomie, ledit point étant choisi pour que la valeur de l'aire d'engagement de l'outil dans le bloc de matière brute soit inférieure à ladite valeur maximale.

Le procédé décrit ci-dessus sera mis en oeuvre à l'aide d'un programme d'ordinateur destiné à être exécuté sur un ordinateur. Ce programme d'ordinateur sera préférentiellement stocké sur un support de stockage lisible par un ordinateur.

**Brève description des figures**

D'autres caractéristiques et avantages vont apparaître dans la description détaillée qui suit faite en regard des dessins annexés dans lesquels :

- Les figures 1 A et 1B illustrent le principe d'usinage d'une pièce dans un bloc de matière,
- La figure 2 représente le trajet suivi par un outil pour l'usinage d'une poche fermée, en mettant en oeuvre le procédé de l'invention,
- Les figures 3A et 3B représentent le trajet suivi par un outil pour l'usinage d'une poche ouverte, en mettant en oeuvre le procédé de l'invention.

**Description détaillée d'au moins un mode de réalisation**

L'invention concerne un procédé mis en oeuvre par une machine à commande numérique. Le procédé de l'invention permet de déterminer le trajet d'un outil 1 d'usinage de la machine à commande numérique. Il est réalisé grâce à un programme informatique exécuté par une unité de traitement de la machine ou associée à celle-ci. Il est mémorisé dans ladite unité de traitement sur un support mémoire lisible. Tous les types de supports, intégrés à la machine ou dans une unité de traitement distincte, amovibles ou accessibles à travers un réseau de communication, et classiquement utilisés pour mémoriser un programme informatique, pourront être envisagés.

Ledit programme comporte plusieurs modules logiciels destinés à commander le trajet de l'outil pour la fabrication d'une pièce par usinage. Un premier module logiciel est par exemple exécuté par l'unité de traitement pour usiner une poche fermée dans un bloc de matière brut. Un deuxième module logiciel est par exemple exécuté par l'unité de traitement pour usiner une poche ouverte dans le bloc de matière brut.

Le bloc 2 de matière brut à partir duquel la pièce est obtenue peut présenter une forme initiale quelconque.

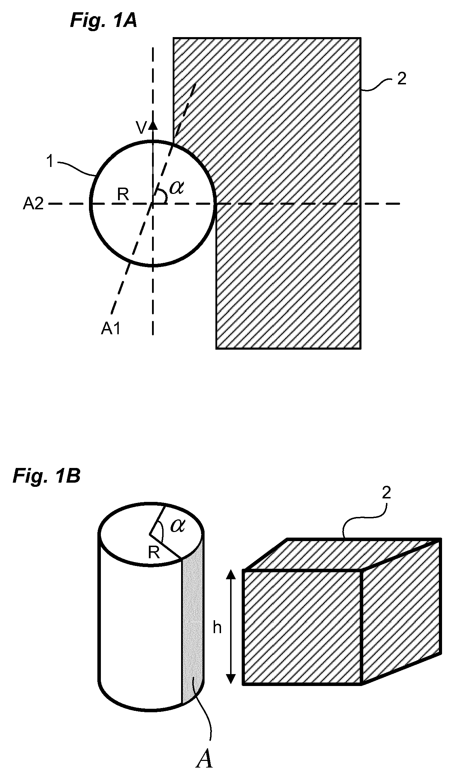

Selon l'invention, le procédé de détermination du trajet T de l'outil 1 est construit de manière à prendre en compte la charge de l'outil. Dans l'invention, la charge de l'outil est fonction de l'aire d'engagement de l'outil, c'est-à-dire de la surface de contact entre l'outil et la matière lors de l'usinage (figure 1 B). Ainsi, une valeur maximale $A_{max}$ d'aire d'engagement est prédéterminée, par exemple par l'opérateur, et mémorisée par l'unité de traitement dans une mémoire accessible par le programme informatique.

En outre, on verra ci-dessous que le trajet de l'outil est déterminé point par point. Le point N+1 est en effet déterminé à partir de la passe précédente.

*Réalisation d'une poche fermée*

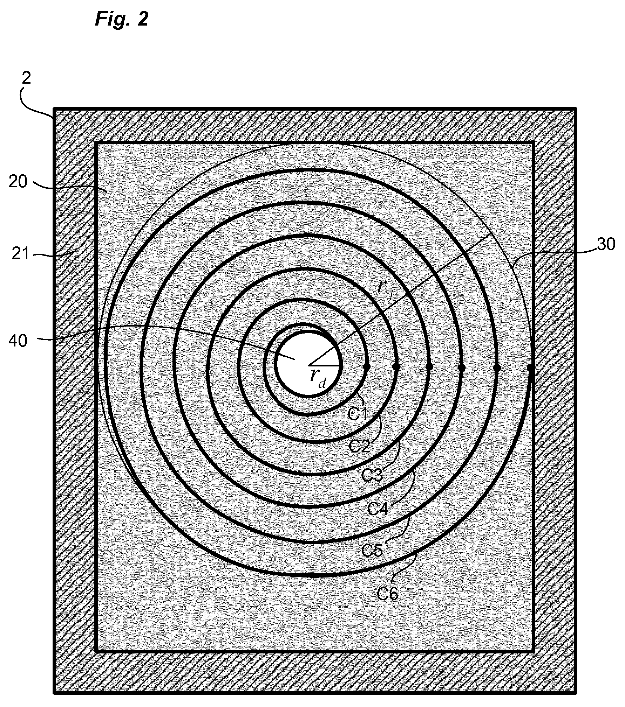

Pour l'usinage d'une poche fermée 20 dans un bloc 2 de matière brute, le programme détermine une zone circulaire 30 de rayon $r_f$ circonscrite dans ladite poche à réaliser (figure 2). La zone circulaire de rayon $r_f$ est ensuite divisée en plusieurs portions de courbes paramétriques reliées entre elles de manière à former une spirale.

De manière connue, l'usinage d'une poche fermée débute toujours par une entrée dans la matière. Cette entrée est par exemple réalisée par un trou réalisé en hélice dans la matière, de manière à former un orifice 40 circulaire de rayon $r_d$.

Sur chaque courbe paramétrique, la position de l'outil est déterminée par les coordonnées x, y suivantes :

$$x = x_0 + (R_i + C_i \times a) \times \cos(a)$$

$$y = y_0 + (R_i + C_i \times a) \times \sin(a)$$

Dans lesquelles :

- $x_0$, $y_0$ correspondent aux coordonnées du centre de la zone circulaire à réaliser.

- $R_i$ définit le rayon de la portion de courbe paramétrique i par la relation suivante :

  ○

$$R_i = R_{i-1} + C_{i-1} \times 2\pi$$

- $a$ correspond à la position angulaire de l'outil par rapport à un axe de référence passant par le centre du cercle à usiner, ledit axe étant par exemple horizontal.

- $C_i$ correspond à un coefficient, dit d'incrémentation radiale, définissant chaque portion i (i allant de 1 à n) de courbe paramétrique par rapport au centre de la zone circulaire à usiner. $C_i$ est par exemple redéfini à chaque variation de 360° de l'angle $a$.

Le coefficient $C_i$ d'incrémentation radiale est défini par la relation suivante :

$$C_i = \frac{d \times k \times R_i}{2\pi \times (R + k \times R_i)}$$

Dans laquelle :

- d correspond au décalage maximal prédéfini pour l'usinage.

- R correspond au rayon de l'outil.

- k correspond à un coefficient dont la détermination sera expliquée ci-après.

Pour la première portion de courbe, on désigne :

$$R_0 = r_d$$

$$C_0 = \frac{d \times k \times R_0}{2\pi \times (R + k \times R_0)}$$

- Avec $r_d$ qui correspond au rayon de l'hélice créé pour percer initialement la poche.

Selon l'invention, la détermination du coefficient k est réalisée en tenant compte de l'aire d'engagement de l'outil par rapport au bloc de matière (figure 1 B). Cette aire d'engagement répond à la relation suivante :

$$A = \alpha \times r \times h$$

Dans laquelle :

- $\alpha$ correspond à l'angle d'engagement de l'outil dans le bloc de matière (figures 1 A et 1 B).
- r correspond au rayon de coupe effectif de l'outil à sa position actuelle, ledit rayon de coupe effectif correspondant à la distance maximale entre l'axe de l'outil et les points de contact entre l'outil et le bloc de matière. Si l'outil est de forme cylindrique, ce rayon de coupe correspond au rayon R de l'outil.
- h correspond à la hauteur d'outil en contact avec le bloc de matière.

La valeur du coefficient k détermine la valeur du coefficient $C_i$ d'incrémentation radiale et donc le positionnement de la portion de courbe paramétrique.

En outre, du coefficient $C_i$ d'incrémentation radiale vont dépendre la position de l'outil et le vecteur de mouvement de l'outil. En effet, pour chaque coefficient $C_i$, les coordonnées x, y de position de l'outil et les coordonnées Vx, Vy du vecteur V de mouvement de l'outil sont définies par les relations suivantes :

$$x = x_0 + (R_i + C_i \times a) \times \cos(a)$$

$$y = y_0 + (R_i + C_i \times a) \times \sin(a)$$

et

$$Vx = C_i \times \cos(a) - (R_i + C_i \times a) \times \sin(a)$$

$$Vy = C_i \times \sin(a) + (R_i + C_i \times a) \times \cos(a)$$

La position de l'outil 1 et le vecteur V de mouvement de l'outil 1 permettent ensuite au programme de déterminer l'angle d'engagement $\alpha$ de l'outil dans le bloc de matière et d'en déduire ainsi l'aire d'engagement A définie ci-dessus. Pour rappel, comme représenté sur la figure 1A, l'angle d'engagement $\alpha$ de l'outil 1, dans un plan parallèle au vecteur V de mouvement de l'outil, correspond à l'angle fait entre un axe A1 joignant le centre de l'outil 1 au point d'intersection entre l'outil 1 et le bloc 2 de matière et un axe A2 perpendiculaire au vecteur V de mouvement de l'outil, dont les coordonnées sont indiquées ci-dessus.

Ainsi le programme met en place une recherche d'une valeur à affecter au coefficient k pour déterminer le coefficient $C_i$ d'incrémentation radiale pour lequel le trajet de l'outil 1 n'entraînera pas un dépassement de la valeur maximale $A_{max}$ de l'aire d'engagement mémorisée. L'opération est mise en oeuvre pour un certain nombre de points de la courbe définis par la variation de l'angle a.

Une fois la valeur du coefficient k déterminée, et donc la définition d'un coefficient $C_i$ d'incrémentation radiale terminée par le programme, une suite de points, formant la portion de courbe, est calculée à partir des paramètres évoqués ci-dessus, en faisant varier l'angle a de 0 à 360°.

L'opération est réitérée par le programme tant que la condition $R_i = r_f$ n'est pas remplie.

La figure 2 montre ainsi le trajet en spirale réalisé par l'outil pour réaliser une zone circulaire d'une poche fermée, en tenant compte d'une aire d'engagement maximale prédéfinie. La zone circulaire est usinée avec une entrée hélicoïdale dans le bloc de matière. Le trajet est divisé en six portions C1, C2, C3, C4, C5, C6 de courbes paramétriques, chacune définie par un coefficient $C_i$ d'incrémentation radiale distinct.

### Réalisation d'une poche ouverte

Pour réaliser une poche ouverte 22, le principe de l'invention qui consiste à tenir compte d'une valeur maximale $A_{max}$ mémorisée pour l'aire d'engagement de l'outil s'applique également.

Pour réaliser une poche ouverte 22 par usinage du bloc 2 de matière, le programme informatique de l'invention met en oeuvre les étapes décrites ci-dessous.

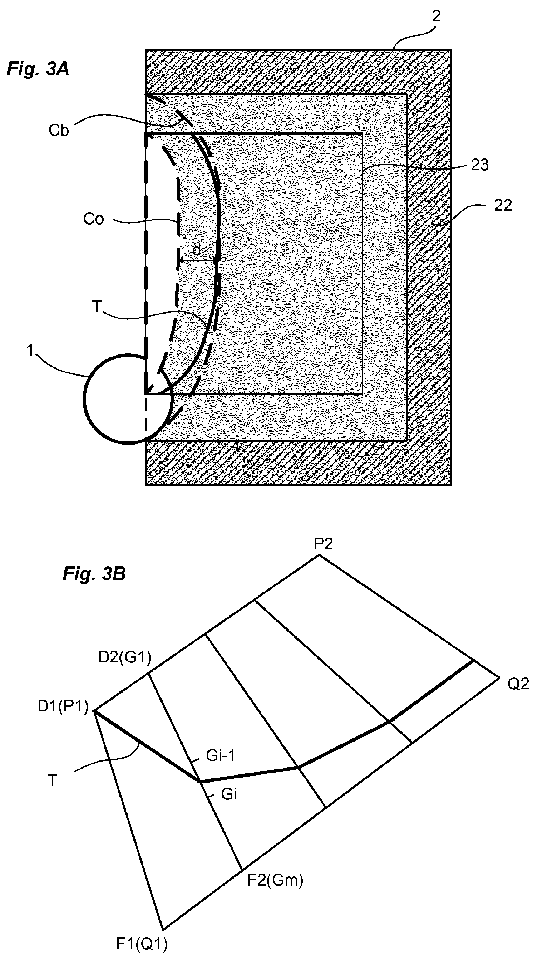

Le principe de fonctionnement est explicité en relation avec les figures 3A et 3B.

Sur la figure 3A, on peut voir le bloc 2 de matière et la poche ouverte 22 à usiner pour réaliser la pièce 23.

Dans une première étape, le programme commande l'outil 1 de manière à réaliser une première passe suivant une première courbe, dite courbe d'origine Co.

Une fois la première passe réalisée, le programme calcule chaque passe suivante qui permet de creuser progressivement la poche.

Selon l'invention, en référence à la figure 3B, pour chaque nouvelle passe, le trajet T de l'outil correspond à plusieurs segments de droite reliés entre eux.

Pour déterminer le trajet T de l'outil 1 sur une nouvelle passe, le programme procède de la manière suivante :

Initialement, le programme crée une première courbe cible, notée Cb sur la figure, telle que :

o la courbe Cb se trouve à droite de la courbe d'origine Co,

o la courbe Cb soit un décalage de la courbe d'origine Co, la distance d de décalage étant le décalage maximal prédéfini pour l'usinage,

o l'ordre d'apparition de chaque segment de la courbe Cb respecte l'ordre d'apparition d'un segment correspondant de la courbe d'origine Co.

La courbe Cb correspond ainsi à la courbe d'origine, élargie de la distance d de décalage maximal.

Le programme obtient ainsi deux courbes constituées chacune de plusieurs segments dont les points sont synchronisés entre eux.

Pour mieux expliquer le principe de fonctionnement, on définit les paramètres suivants :

- R : rayon de l'outil,
- d : décalage entre les passes, correspondant au décalage maximal,
- Co' : courbe de plusieurs segments consécutifs qui suivent la courbe d'origine Co,
- Cb' : courbe de plusieurs segments consécutifs qui suivent la courbe Cb ;
- n : le nombre de points sur Co' et Cb',
- P1, P2, ..., Pn, les points sur Co',
- Q1, Q2, ..., Qn, les points sur Cb',
- T : trajet à créer, sous forme d'une suite de points.

Ensuite les trajectoires sont créées à l'aide des Co', Cb', prenant en compte la charge de l'outil. Les trajectoires sont calculées point par point, en tenant compte de la charge de l'outil pour atteindre chacun des points.

Comme pour la réalisation d'une poche fermée, la charge de l'outil est définie par rapport à la valeur maximale $A_{max}$ prédéfinie pour l'aire d'engagement de l'outil 1 dans le bloc 2 de matière. L'aire d'engagement de l'outil est définie par la relation :

$$A = \alpha \times r \times h$$

Dans laquelle :

- $\alpha$ correspond à l'angle d'engagement de l'outil dans le bloc de matière.

- r correspond au rayon de coupe effectif de l'outil à sa position actuelle.

- h correspond à la hauteur d'outil en contact avec le bloc de matière.

En relation avec la figure 3B, le programme procède de la manière suivante pour la détermination du trajet T de l'outil, ledit trajet T étant constitué d'une suite de points reliés entre eux.

Le programme ajoute le premier point P1 de Co' dans T; c'est le point de départ du trajet à créer.

Ensuite le programme détermine le point suivant du trajet, en mettant en oeuvre les étapes suivantes :

- division des deux segments <P1,P2> et <Q1,Q2> en k segments chacun, de longueur égale; k étant choisi pour que la longueur de chaque segment obtenu soit inférieure ou égale à $0,5 \times \sqrt{2 \times tol \times R}$ avec le paramètre *tol* qui correspond à un paramètre de tolérance de l'usinage prédéfini par l'opérateur et *R* correspondant au rayon de l'outil.

- Enregistrement des deux suites de points ainsi obtenus, c'est-à-dire :

    ▪ D1, D2, ...,Dk; points obtenus en divisant le segment <P1,P2>, avec D1=P1, Dk=P2 ;
    ▪ F1, F2, ... Fk; points obtenus en divisant le segment <Q1,Q2>, avec F1=Q1, Fk=Q2 ;

- définition d'un point de trajet sur le segment <D2, F2>, correspondant au deuxième point du trajet T en :

    ▪ soustrayant la partie qui est hors de la poche du segment <D2,F2>; le nouveau segment est alors noté <D2,F2'>,
    ▪ divisant le segment <D2,F2'> ainsi obtenu en m segments de longueur égale, m étant choisi pour que la longueur de chaque segment obtenu soit inférieure ou égale à 0.2*D ; les nouveaux points obtenus sont notés G1, G2, ..., Gm; avec G1=D2, Gm=F2',
    ▪ calculant l'aire d'engagement sur les points G2, G3, ..., Gm, en tenant compte du vecteur de mouvement de l'outil suivant chaque segment <P1,G2>, <P1,G3> , .. <P1,Gm> respectivement ;

- si sur un point Gi (i=2,3, ... m), l'aire d'engagement déterminée est supérieure ou égale à la valeur maximale $A_{max}$, alors le point du trajet T est défini sur le segment <Gi-1 ,Gi>.

La définition du point de trajet T sur le segment <Gi-1 ,Gi> est un processus de recherche par dichotomie, avec à chaque itération un calcul de l'aire d'engagement. La recherche par dichotomie s'arrête lorsque la taille du domaine de recherche devient inférieure à la tolérance de l'usinage.

Le programme met en oeuvre le même processus pour définir les points de trajet sur les segments <D3,F3>, ..., <Dk,Fk>. De même, tout ce processus est de nouveau réalisé pour les deux segments correspondants suivants de la courbe d'origine Co et de la courbe Cb.

Que ce soit pour réaliser une poche fermée ou une poche ouverte, le procédé de l'invention mis en oeuvre par l'exécution du programme présente de nombreux avantages, parmi lesquels :

- une diminution de la longueur du trajet,
- une diminution de la durée d'usinage,
- une augmentation de la durée de vie de l'outil en tenant compte de l'aire d'engagement de l'outil dans le bloc de matière et non seulement de son angle d'engagement.

Le procédé de l'invention pourra s'appliquer pour l'usinage de tous types de matière, par exemple métallique, céramique ou résine comme celle employée dans le domaine dentaire.

## Revendications

1. Procédé de détermination du trajet d'un outil (1) d'usinage pour fabriquer une pièce (21, 22) par usinage dans un bloc (2) de matière brute, **caractérisé en ce qu'**il comporte les étapes suivantes :

   - Détermination de la position de l'outil (1),
   - Détermination du vecteur (V) de mouvement de l'outil en tenant compte de ladite position,
   - Détermination d'une valeur d'aire d'engagement ($A$) de l'outil par rapport au bloc (2) de matière brute à partir du vecteur (V) de mouvement de l'outil déterminé,
   - Comparaison de ladite valeur d'aire d'engagement calculée avec une valeur maximale ($A_{max}$) mémorisée,
   - Modification du vecteur (V) de mouvement de l'outil tant que la valeur d'aire d'engagement est supérieure à ladite valeur maximale mémorisée.

2. Procédé selon la revendication 1, **caractérisé en ce que** lors de l'usinage d'une poche fermée (20) dans ledit bloc (2) de matière brute, le trajet (T) de l'outil suit une spirale découpée en plusieurs portions, et **en ce que**, pour chaque nouvelle portion de la spirale, l'étape de détermination du vecteur de mouvement de l'outil est mise en oeuvre en tenant compte d'un coefficient ($C_i$), dit d'incrémentation radiale.

3. Procédé selon la revendication 2, **caractérisé en ce que** le coefficient ($C_i$) d'incrémentation radiale est déterminé à partir d'un rayon de la portion de spirale précédente, d'un paramètre de dimension de l'outil, d'un décalage maximal de l'usinage mémorisé et d'un coefficient (k).

4. Procédé selon la revendication 3, **caractérisé en ce que** ledit coefficient (k) prend une valeur déterminée à l'issue d'une recherche par dichotomie, ladite valeur du coefficient étant choisie dans un intervalle dans lequel la valeur d'aire d'engagement de l'outil est inférieure à ladite valeur maximale mémorisée.

5. Procédé selon l'une des revendications 2 à 4, **caractérisé en ce que** chaque portion du trajet est réalisée sur un angle de 360°.

6. Procédé selon la revendication 1, **caractérisé en ce que** lors de l'usinage d'une poche ouverte (23) dans ledit bloc (2) de matière, le trajet (T) de l'outil est constitué de plusieurs portions rectilignes, chaque portion étant tracée entre un point initial et un point final suivant ledit vecteur de mouvement déterminé pour une valeur d'aire d'engagement de l'outil inférieure à ladite valeur maximale ($A_{max}$).

7. Procédé selon la revendication 6, **caractérisé en ce que** chaque point final d'une première portion devient le point initial d'une deuxième portion du trajet et **en ce que** le point final de ladite deuxième portion est déterminé par dichotomie, ledit point étant choisi pour que la valeur de l'aire d'engagement de l'outil dans le bloc de matière brute soit inférieure à ladite valeur maximale.

8. Programme d'ordinateur destiné à être exécuté sur un ordinateur de manière à mettre en oeuvre le procédé tel que défini dans l'une des revendications 1 à 7.

9. Support de stockage lisible par un ordinateur comportant le programme d'ordinateur défini dans la revendication 8.

**Fig. 1A**

**Fig. 1B**

**Fig. 2**

**Fig. 3A**

Cb

Co

d

T

1

2

23

22

**Fig. 3B**

P2

D2(G1)

D1(P1)

T

Gi-1

Gi

Q2

F2(Gm)

F1(Q1)

Europäisches
Patentamt

European
Patent Office

Office européen
des brevets

**RAPPORT DE RECHERCHE EUROPEENNE**

Numéro de la demande

EP 16 19 0573

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2013/151000 A1 (MACKMAN STEPHEN WILLIAM [GB]) 13 juin 2013 (2013-06-13) * alinéa [0107] - alinéa [0215]; figures 1-28 * | 1-9 | INV. G05B19/4093 |
| X | US 2013/325165 A1 (SONG JIANPING [US]) 5 décembre 2013 (2013-12-05) * alinéa [0031] - alinéa [0077]; figures 1-22 * | 1-9 | |
| X | US 2014/297021 A1 (AGGARWAL SAURABH [CH] ET AL) 2 octobre 2014 (2014-10-02) * alinéa [0129] - alinéa [0195]; figures 1-24 * | 1-9 | |
| X | US 2005/246052 A1 (COLEMAN GLENN [US] ET AL) 3 novembre 2005 (2005-11-03) * alinéa [0079] - alinéa [0192]; figures 1-31b * | 1-9 | |

DOMAINES TECHNIQUES RECHERCHES (IPC)

G05B

Le présent rapport a été établi pour toutes les revendications

| Lieu de la recherche | Date d'achèvement de la recherche | Examinateur |
|---|---|---|
| La Haye | 15 février 2017 | Hauser, Leon |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 19 0573

15-02-2017

| Document brevet cité au rapport de recherche | Date de publication | Membre(s) de la famille de brevet(s) | Date de publication |
|---|---|---|---|
| US 2013151000 A1 | 13-06-2013 | GB 2497526 A | 19-06-2013 |
| | | US 2013151000 A1 | 13-06-2013 |
| US 2013325165 A1 | 05-12-2013 | CN 104364722 A | 18-02-2015 |
| | | EP 2856267 A1 | 08-04-2015 |
| | | JP 2015521333 A | 27-07-2015 |
| | | US 2013325165 A1 | 05-12-2013 |
| | | US 2015205294 A1 | 23-07-2015 |
| | | WO 2013181392 A1 | 05-12-2013 |
| US 2014297021 A1 | 02-10-2014 | EP 2673678 A1 | 18-12-2013 |
| | | US 2014297021 A1 | 02-10-2014 |
| | | WO 2012107594 A1 | 16-08-2012 |
| US 2005246052 A1 | 03-11-2005 | AT 557355 T | 15-05-2012 |
| | | CA 2564404 A1 | 24-11-2005 |
| | | EP 1745400 A1 | 24-01-2007 |
| | | KR 20070047738 A | 07-05-2007 |
| | | US 2005246052 A1 | 03-11-2005 |
| | | US 2005256604 A1 | 17-11-2005 |
| | | US 2008269943 A1 | 30-10-2008 |
| | | US 2010191359 A1 | 29-07-2010 |
| | | US 2011178629 A1 | 21-07-2011 |
| | | WO 2005111909 A1 | 24-11-2005 |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050246052 A1
- US 20130151000 A1
- US 20130325165 A1
- US 20140297021 A1